# EUROPEAN PATENT SPECIFICATION

(11) **EP 4 095 822 B1**
(45) Date of publication and mention of the grant of the patent: **08.07.2026**
(21) Application number: 22172480.0
(22) Date of filing: 10.05.2022
(51) Int. Cl.: G08G 1/052, G08G 1/0962, G08G 1/16, G06V 20/58, B60W 30/18, B60W 10/04, B60W 10/18, B60W 10/20, B60W 50/00, B60W 50/14

(54) **AUTOMATED TRAFFIC VIOLATION WARNING AND PREVENTION SYSTEM FOR VEHICLES**
AUTOMATISCHES VERKEHRSVERSTOSSWARN- UND VERMEIDUNGSSYSTEM FÜR FAHRZEUGE
SYSTÈME AUTOMATISÉ D'AVERTISSEMENT ET DE PRÉVENTION DES INFRACTIONS ROUTIÈRES POUR VÉHICULES

(30) Priority: 26.05.2021 US 202117331431
(43) Date of publication of application: 30.11.2022
(73) Proprietor: Robert Bosch GmbH, 70442 Stuttgart (DE)
(72) Inventor: Taha, Laith, Windsor, Ontario N9B 3X5 (CA); Deshpande, Anup, Troy, MI 48084 (US); Mccormick, Troy, Milford, MI 48380 (US)

(56) References cited:
- GB-A- 2 523 354
- US-A1- 2002 019 703
- US-A1- 2009 243 825
- US-A1- 2012 078 509
- US-A1- 2012 191 289
- US-A1- 2013 304 364
- US-A1- 2014 257 686
- US-A1- 2016 196 744
- US-A1- 2019 355 245
- US-A1- 2020 160 704
- US-B1- 9 616 809

## Description

### TECHNICAL FIELD

The disclosure relates generally to vehicles, and, in particular, to driving assistance systems and methods for vehicles.

### BACKGROUND

Modern on-road vehicles typically include some level of driving automation. SAE International describes the levels of automation ranging from level 0 to level 5. These levels of automation are briefly described herein. A level 0 (SAE 0) vehicle includes no automation, and a level 5 (SAE 5) vehicle has full automation. In vehicles with SAE 0 through level 2 (SAE 2), a human driver monitors the driving environment. In vehicles with level 3 (SAE 3) through SAE 5, an automated driving system monitors the driving environment.

Vehicle automation is performed using a driving assistance system which includes, for example, adaptive cruise control, a lane-keeping system, and an object detection and avoidance system. The adaptive cruise control maintains the ego-vehicle at a predetermined speed and/or a predetermined distance from a leading vehicle. The lane-keeping system is equipped to keep the ego-vehicle centered in a lane by automatically controlling a steering angle of the ego-vehicle. For example, the lane-keeping system keeps the vehicle in a proper lane for navigating the vehicle from a start point to a destination. The object detection and avoidance system is configured to avoid objects by slowing down or stopping. With these systems the operator of the ego-vehicle can enjoy automatic and comfortable transportation.

Driver assistance systems also provide end users with various navigation functions and features. These navigation systems normally determine an optimum route from a starting location to a destination location in a geographic region by using the input from the driver and from a position detecting unit, e.g., a GPS system. The GPS system might assist in the navigation part but is not very helpful in warning drivers of potential traffic violations or in avoiding traffic violations. Furthermore, different geographic regions often have different traffic rules. Drivers may not be aware of the different traffic rules in these regions thereby increasing the risk of violating a traffic rule while driving a vehicle.

What is needed is a system or method for identifying traffic rules pertaining to the current geographic location of a vehicle and warning drivers of potential violations of these rules and/or automatically taking action to prevent violations of the rules.

US 2014/257686 A1 discloses methods and systems for making lane determinations as to a roadway on which the vehicle is travelling. A determination is made as to a lane of a roadway in which a vehicle is travelling. An identification is made as to an adjacent lane that is adjacent to the lane in which the vehicle is travelling. An assessment is made as to a drivability of the adjacent lane.

### SUMMARY OF THE CLAIMED SUBJECT MATTER

The invention is defined by the independent claims. The dependent claims define advantageous embodiments.

A method of operating a vehicle having a driver assistance system includes detecting driving parameters pertaining to the vehicle while the vehicle is being driven on a roadway using a sensor system of the vehicle; detecting objects in and around the roadway using the sensor system of the vehicle, the objects including at least road signs, lane indicators, and other vehicles on the roadway; identifying a traffic rule pertaining to the roadway and a geographic location in a geographic region that the vehicle is currently traveling in using a traffic violation warning and prevention system of the driver assistance system, the traffic rule being different in different geographic regions; and detecting a traffic situation pertaining to the traffic rule based on the detected objects and the driving parameters using the sensor system; the method further comprising: generating an alert that warns the driver of a potential traffic violation when the traffic situation is detected using the traffic violation warning and prevention system; and/or automatically taking control of at least one of a steering system, a speed system, and a braking system of the vehicle using the driver assistance system to prevent a violation of the traffic rule.

### BRIEF DESCRIPTION OF THE DRAWINGS

The features and advantages of the disclosure should become more readily apparent to those of ordinary skill in the art by reference to the following detailed description and the accompanying figures in which:
FIG. 1 is a block diagram of a vehicle including a driving assistance system in with a traffic violation warning and prevention system in accordance with the present disclosure;
FIG. 2 is a block diagram of the traffic violation warning and prevention system of the vehicle of FIG. 1;
FIG. 3 is an illustration of a traffic situation pertaining to a traffic rule, the traffic rule in this case being the requirement to stop at a stop sign;
FIG. 4 is an illustration of a traffic situation pertaining to a traffic rule, the traffic rule in this case indicating that passing vehicles on the right side is prohibited;
FIG. 5 is an illustration of a traffic situation pertaining to a traffic rule, the traffic rule in this case being the prohibition of crossing over a solid lane dividing line to pass another vehicle.

### DETAILED DESCRIPTION

For the purpose of promoting an understanding of the principles of the disclosure, reference will now be made to the embodiments illustrated in the drawings and described in the following written specification. It is understood that no limitation to the scope of the disclosure is thereby intended.

Aspects of the disclosure are disclosed in the accompanying description. It should be noted that any discussion herein regarding "one embodiment", "an embodiment", "an exemplary embodiment", and the like indicate that the embodiment described may include a particular feature, structure, or characteristic, and that such particular feature, structure, or characteristic may not necessarily be included in every embodiment. In addition, references to the foregoing do not necessarily comprise a reference to the same embodiment. Finally, irrespective of whether it is explicitly described, one of ordinary skill in the art would readily appreciate that each of the particular features, structures, or characteristics of the given embodiments may be utilized in connection or combination with those of any other embodiment discussed herein.

For the purposes of the disclosure, the phrase "A and/or B" means (A), (B), or (A and B). For the purposes of the disclosure, the phrase "A, B, and/or C" means (A), (B), (C), (A and B), (A and C), (B and C), or (A, B and C).

The terms "comprising," "including," "having," and the like, as used with respect to embodiments of the disclosure, are synonymous.

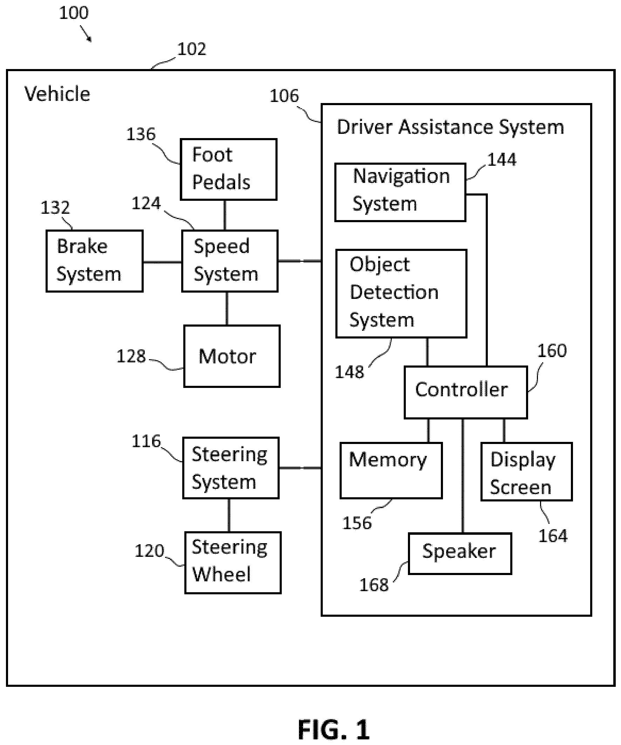

As shown in FIG. 1, a system 100 includes a vehicle 102. The vehicle 102 includes a driving assistance system 106 configured to navigate the vehicle 102. The vehicle 102 is a personal vehicle, a rental car, a shuttle, a limousine, a corporate vehicle, a livery vehicle, a taxi, or semi-trailer truck. The vehicle 102 is any automotive machine suitable for travel on a roadway system, such as public and private roads, highways, and interstates. The vehicle 102, which is also referred to as an ego-vehicle, may have any level of automation from SAE 1 through SAE 5. In an exemplary embodiment, the vehicle 102 is an SAE 3 application having both speed and steering angle automatically controlled by the driving assistance system 106. In other embodiments, the vehicle 102 has any level of automation and/or autonomy that includes automatic steering control.

The exemplary vehicle 102 of FIG. 1 includes a steering system 116 and a steering wheel 120, a speed system 124 operably connected to a motor 128, a brake system 132, and foot pedals 136. The steering system 116 is configured control a steering angle of the vehicle 102 so that the vehicle 102 can be automatically and/or manually maneuvered around corners and along roads.

. The steering system 116 moves, pivots, and/or rotates wheels of the vehicle 102 relative to a chassis of the vehicle 102 to steer the vehicle 102. The steering system 116 may be controlled by the driving assistance system 106 so that the steering angle of the vehicle 102 is automatically electronically controlled. The steering system 116 may also be manually controlled by an operator of the vehicle 102 using the steering wheel 120. The steering wheel 120 is also referred to herein as an input device of the vehicle 102 and/or as a human machine interface (HMI) device, and the operator of the vehicle 102 is also referred to as a driver. As used herein, the steering angle of the vehicle 102 is an angle of the wheels of the vehicle 102 relative to a centerline of the vehicle 102. In one embodiment, when the operator rotates the steering wheel 120 control is taken away from the driving assistance system 106 and is granted to the operator according to an operator takeover.

The motor 128 is configured to generate a drive torque for moving the vehicle 102. In one embodiment, the drive torque is transmitted to the wheels of the vehicle 102 through a transmission. Alternatively, the drive torque is directly transmitted to the wheels, and the vehicle 102 does not include a transmission. In a specific embodiment, the motor 128 is an electric motor supplied with electrical energy from a battery of the vehicle 102. In another embodiment, the motor 128 is an internal combustion engine that burns a fuel for generating the drive torque. The motor 128 may also be a hybrid combination including an electric motor and an internal combustion engine, as is known in the art.

The brake system 132 is configured to generate a braking force for slowing the vehicle 102 and for maintaining the vehicle 102 in a stopped position. The brake system 132, in one embodiment, is a hydraulic brake system including disc brakes.

With reference to FIG. 1, the speed system 124 is configured to automatically control a speed of the vehicle 102. For example, the speed system 124 controls the motor 128 to generate a desired magnitude of the drive torque for moving the vehicle 102 at a desired speed. The speed system 124 may also control the brake system 132 for automatically slowing the vehicle 102 and for automatically bringing the vehicle 102 to a controlled and comfortable stop.

The foot pedals 136 are operably connected to the speed system 136 and are configured to enable an operator of the vehicle 102 to manually control the speed system 124 and to manually control the speed of the vehicle 102. The foot pedals 136 include at least an acceleration pedal for controlling the magnitude of the drive torque of the motor 128, and a brake pedal for selectively activating the brake system 132 for slowing or stopping the vehicle 102. In one embodiment, when the operator operates the foot pedals 136 control is taken away from the driving assistance system 106 and is granted to the operator according to an operator takeover.

As shown in FIG. 1, the driving assistance system 106 includes a navigation system 144, an object detection system 148, and a memory 156 each operably connected to a controller 160. In one embodiment, the navigation system 144 is a satellite navigation system that uses the global positioning system (GPS), the global navigation satellite system (GNSS), and/or any other satellite-based navigation system to generate the vehicle position data 164 from satellite positioning data. The navigation system 144 receives the satellite positioning data from satellites and processes the received data to determine the vehicle position data, which corresponds to a position of the vehicle 102 on the Earth. The vehicle position data may be in the format of longitude and latitude and/or any other format.

The navigation system 144 includes map data which corresponds to a map of roadways that are available to the vehicle 102. The navigation system 144 is configured to use the vehicle position data to determine the position of the vehicle 102 relative to the map data. Accordingly, the navigation system 144 is configured to determine the specific point on the roadway on which the vehicle 102 is currently being operated using the vehicle position data and the map data.

The navigation data, in an exemplary embodiment, correspond to a route from a starting point to a destination using the available roadways of the map data. In one embodiment, the operator of the vehicle 102 configures the navigation system 144 with a desired destination, and the navigation system 144 automatically generates the navigation data for navigating the vehicle 102 to the destination. As described herein, the driving assistance system 106 typically automatically controls the speed of the vehicle 102 using the speed system 124 and the steering angle of the vehicle 102 using the steering system 116 to navigate the vehicle 102 automatically to the destination based on the navigation data.

The navigation system 144 may be configured to apply data layers to the map data for navigating the vehicle 102. For example, the navigation system 144 may include a digital traffic layer that includes real-time traffic data (not shown). In determining the navigation data for navigating the vehicle 102 to the destination, the navigation system 144 processes the traffic data layer so that the vehicle 102 is navigated using an optimized route that minimizes traffic delays and slowdowns.

The object detection system 148 includes at least one image sensor mounted at one or more locations on or in the vehicle 102. The at least one image sensor may comprise a visible light sensor. In another embodiment, the image sensor is configured as a thermal imaging device configured to generate the image data based on thermal radiation and/or an infrared radiation. In some embodiments, the object detection system 148 includes a LIDAR (light detection and ranging) system, an ultrasonic ranging system and/or a radar system that is configured to generate image data or object detection data as an alternative to or in addition to image data generated by the at least one image sensor.

The sensors of the object detection system 148 are configured to generate image data corresponding to images of the road ahead of the current position of the vehicle 102 and includes data corresponding to road edges and road surface markings that identify lanes of travel, such as striped lines and double lines. The field of view extends to both road edges. Exemplary road surface markings include painted markings dividing and/or identifying lanes of travel. The sensor system 110 may also be configured to detect other vehicles, pedestrians, cyclists and the like on or around the roadway as well as stationary objects such as road signs and traffic lights.

The controller 160 of the driver assistance system is provided as at least one microcontroller and/or microprocessor and is configured to perform various tasks, such as automatic steering and/or speed control of the vehicle using the data and inputs from the other components of the system. As part of the driver assistance system 106, the controller 160 is configured to automatically control the steering angle and the speed of the vehicle 102 based on at least the navigation data from the navigation system, the map data, the vehicle position data, and the lane position. For example, the controller 160 is configured to control the steering system 116 to automatically position the vehicle in the center of a lane of the roadway. The controller 160 is also configured to control the speed of the vehicle 102 by controlling the drive torque of the motor 128 and by controlling the brake system 132. In certain SAE levels, such as SAE 3 through SAE 5, the driving assistance system navigates the vehicle 102. For example, the controller may be configured to process the data from the sensor system 110 to detect objects and hazards in the roadway and automatically control the steering and speed or braking of the vehicle to avoid any detected objects or hazards.

The controller 160 is configured to access the memory 156. The memory 156 is a non-transitory computer readable storage medium that is configured to store programmed instructions that when executed by a processor of the controller 160 enable the processor to perform functions related to the driving assistance system.

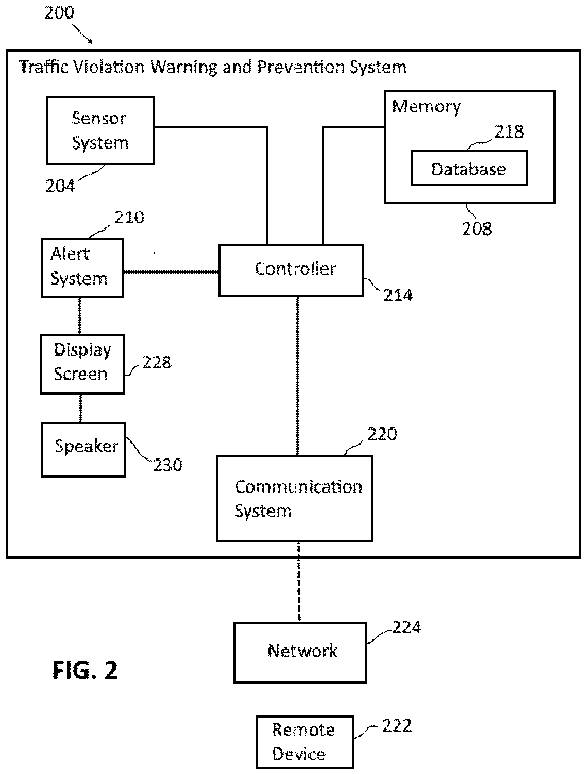

According to this disclosure, the driving assistance system 106 is configured to implement a traffic violation warning and prevention system 200 as depicted in FIG. 2. The traffic violation warning and prevention system 200 is configured to determine traffic laws, rules and/or regulations pertaining to the roadway and/or geographic location that the vehicle is currently traveling in. Using sensors of the vehicle, the system is configured to detect objects in and around the roadway, such as lane indicators or markings, road edges road signs, other vehicles and their positions in the roadway. The system is also configured to determine driving parameters and characteristics of the vehicle on the roadway, such as position on the roadway with respect to the lanes, the current speed, the current steering angle, whether the vehicle is accelerating or decelerating. With knowledge of the traffic rule(s) of the roadway and positions of other vehicles, pedestrians, and cyclists and with the ability to detect and recognize road signs, lane markings, and the like, the system is capable of detecting traffic situations that pertain to the traffic rule(s). For example, if the rule pertains the passing other vehicles, the system is configured to detect when the vehicle is attempting to pass another vehicle, such as when the vehicle pulls alongside a vehicle in an adjacent lane, or is traveling faster than another vehicle. The system can also detect road signs, such as stop signs, speed limit signs, construction zone signs, no passing zone signs and the like, and determine the traffic rules associated with the signs. The system can then monitor the vehicle behavior to determine if the vehicle is violating or could potentially violate a traffic rule. The system can either generate an alert, such as a visual message on a display screen in the vehicle and/or an audible warning such as a beep, buzz, or spoken message that is broadcast through a speaker in the vehicle. The system may also be configured to take action to prevent the violation. For example, the driver assistance system may be configured to take control of at least one of the steering system, brake system, and speed system to prevent violation of the traffic rule.

Referring to FIG. 2, the traffic violation warning and prevention system 200 includes a sensor system 204, a memory 208, an alert system 210 and a controller 214. The sensor system 204 is configured to detect objects in and around the roadway using at least one sensor on the vehicle. The objects include road signs, lane indicators, pedestrians, cyclists and other vehicles on the roadway. In one embodiment, the sensor system 204 comprises the GPS sensor of the navigation system 144 and the sensors of the object detection system 148 of the driver assistance system. In alternative embodiments, the sensor system 204 may include a separate set of sensors for the traffic violation warning and prevention system 200.

The alert system 210 includes a display screen 228 and/or a speaker 230. When the system 200 detects a violation of a traffic rule or a potential violation of a traffic rule, the alert system 210 is activated. The alert system 210 may be configured to display a visual alert, such as a text message displayed on the display screen 228. The alert system 210 may also be configured to generate an audio alert, such as a beep, buzz, or spoken message, that is output by the speaker 230. The alert can also include haptic feedback, e.g., through a vibration in the seat, steering wheel, or a slight brake jerk.

The controller 220 of the system 200 is provided as at least one microcontroller and/or microprocessor and is configured to perform various tasks for the traffic violation warning and prevention system 200. In one embodiment, the controller 160 is utilized as the controller 220 for the system 200. In alternative embodiments, the controller 220 may comprise a separate controller from the controller 160 of the driver assistance system. The controller 220 includes a processor and is configured to execute programmed instructions stored in the memory 208 that enable the performance of the various functions of the system 200, such as processing sensor data to detect objects, such as other vehicles, pedestrians, and cyclists, to detect road signs and identify the information on the road signs, and to identify lane dividing lines, road edges, and the like. The controller 214 is configured to determine traffic rules pertaining to the vehicle's current geographic location and to monitor driving parameters, such as vehicle speed, acceleration, deceleration, steering angle, and the like with respect to the detected objects to determine whether a violation or potential violation of a traffic rule has or will imminently occur. The controller 214 is also configured to activate the alert system 210 to generate an alert in the case that a traffic violation or a potential traffic violation is occurring. The controller 214 may also be configured to activate the driver assistance system 106 to take control of the steering system 116, speed system 124 and/or brake system 132 of the vehicle 102 away from the driver in order to control the vehicle 102 so as to avoid violating a traffic rule.

The traffic rules pertaining to roadways may be predetermined and programmed into the system, e.g., stored in the memory 208. In particular, the system 200 may include a traffic rule database 218 that is stored in the memory 208. In one embodiment, the memory 208 is part of the memory 156 of the driver assistance system 106. Alternatively, the memory 208 may be a separate memory dedicated to the traffic violation warning and prevention system 200.

The traffic rule database 218 may include traffic rules for a plurality of different locales or geographic regions. As is known in the art, different municipalities or regions of a state or country may have different traffic laws. The traffic rule database 218 has traffic rules stored in connection with the geographic region in which it is applicable. The database 218 can be accessed by accessing with reference to the current geographic region in which the vehicle is located to determine the traffic rules that apply to that region. The current geographic location may be determined using, for example, the GPS sensor of the navigation system 144 and may be updated continuously as the vehicle travels. When the vehicle passes into a different geographic region having new or different traffic laws, the database can be accessed to identify the traffic laws that are applicable to the region.

The traffic rule database 218 may be updated when traffic rules change or new traffic rules are implemented. To this end, the traffic violation warning and prevention system 200 may comprise a communication system 220 configured to enable the system to download traffic rule data for the database from a remote device 222, such as a server or computer, via a network 224. Any suitable type of communication device may be used, including wired or wireless, cellular, satellite, radio frequency, and the like. In case the database 218 does not include traffic rule data for a particular geographic region, the system may also be configured to request traffic rule pertaining to a particular geographic region from the remote device 222 using the communication system 220.

The system 200 may also be configured to identify traffic rules using the sensor system 204. For example, the sensor system 204 enables road signs to be detected information on the signs to be "read", e.g., using a visible image sensor or camera of the sensor system. A road sign, such as a speed limit sign, may be identified using the sensor system 204 and the speed limit data read from the sign. The system 200 is then aware of the current speed limit of the roadway on which the vehicle is traveling. The system 200 can then monitor the current speed of the vehicle 102 and compare it with the detected speed limit to determine whether a speeding violation is occurring or could potentially occur.

Detecting the speed limit may be beneficial in many cases. For example, the detected speed limit may be used if the data pertaining to the roadway in the traffic rule database is incorrect and/or outdated. Some areas, such as construction zones, may have temporary speed limits which are lower than the speed limit typically used for the roadway. Detecting the speed limit on the roadway helps to ensure that the vehicle 102 is traveling at the appropriate speed at all times.

In any event, if the current speed of the vehicle 102 is near or above the detected speed limit, the system 200 can generate an alert or warning regarding the speed limit. In some cases, the system 200 may be configured to take control of the speed system 124 of the vehicle to automatically control the speed so that the vehicle 102 speed does not exceed the detected speed limit.

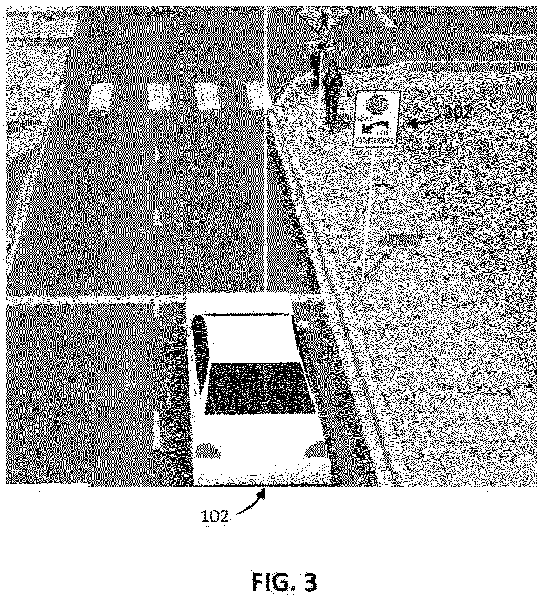

Other road signs may also be detected and read by the system 200. For example, the sensor system 204 may be configured to detect and identify stop signs, such as depicted in FIG. 3. In this case, the system 200 may be configured to detect whether the vehicle is decelerating sufficiently to stop the vehicle 102 in a safe manner at the stop sign 302. If the system 200 detects that the vehicle 102 is not decelerating sufficiently or is traveling too fast as the vehicle is approaching the stop sign 302, the system 200 can generate an alert or warning via the alert system 210 regarding the stop sign, and, if necessary, the system can take control of at least the brake system of the vehicle and apply the brakes so that the vehicle comes to a complete stop at the stop sign.

An example of another sign that may be detected and recognized by the system and that is indicative of a traffic rule is a "no passing zone" sign. No passing zone signs are used to indicate areas of the roadway where the passing of vehicles is prohibited, such as construction areas. When the system 200 detects a no passing zone sign, the system 200 may be configured to generate an alert via the alert system 210 for the driver indicating that passing is not allowed in the current section of the roadway. The system 200 may also be configured to monitor vehicular behavior to detect whether the driver of the vehicle 102 is attempting to perform a passing maneuver in the no passing zone. For example, the system 200 may be configured to detect when another vehicle is in front of the vehicle and to detect that the vehicle is crossing over into an adjacent lane and accelerating to pull alongside the other vehicle. If this situation is detected, the system can generate an alert indicating that passing is not allowed in the no passing zone, and, in some cases, may be configured to take control of the steering and speed systems to prevent the vehicle from passing the other vehicle in order to avoid violating the traffic rule.

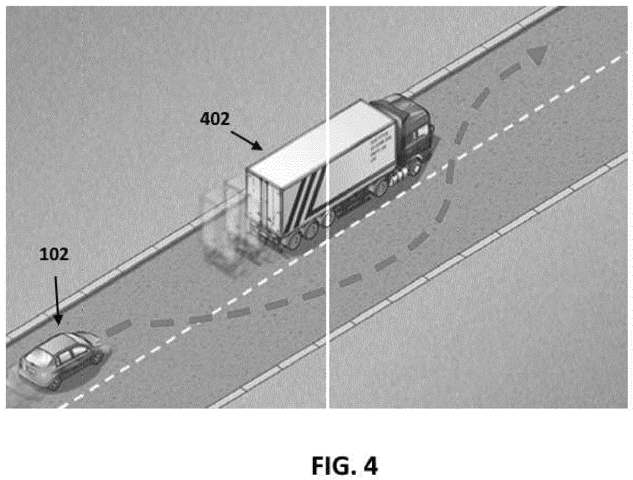

Referring to FIG. 4, another traffic rule that is implemented in many states is the rule that prohibits passing another vehicle on the right on a road, such as on an interstate. The system 200 may be configured to detect when the vehicle 102 is performing a passing maneuver to pass another vehicle 402. For example, the system 200 may be configured to detect when another vehicle 402 is in front of the vehicle 102 in the same lane and to detect that the vehicle 102 is crossing over into an adjacent lane and accelerating to pull along the right side the other vehicle 402. When such a passing maneuver is detected, the alert system 210 may be activated to generate a visual audio and/or haptic warning for the driver regarding the possible violation and, in some cases, the driving assistance system 106 may be activated to take control of the steering, speed, and/or brakes of the vehicle to prevent the passing maneuver.

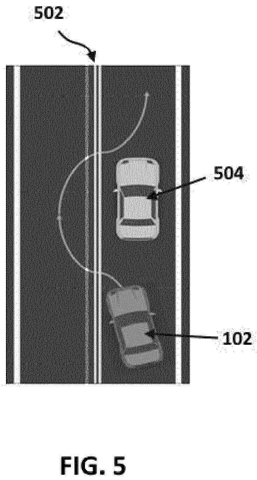

Referring to FIG. 5, the sensor system 204 enables other indicators of traffic laws to be detected, such as lane dividing lines 502. The sensor system can detect the lines that typically divide lanes along a roadway. The system 200 is configured to identify whether there is a solid line or a double solid line or a dotted line dividing the lanes of a roadway using the sensor system. As is known in the art, a solid line or a solid double line as depicted in FIG. 5 arranged between lanes of a roadway means that a driver may not cross over the line to pass another vehicle traveling in front of the driver's vehicle while dotted lines mean that the driver may cross over into the other lane to pass vehicles traveling in front of the driver. The system 200 is configured to know that crossing over into an adjacent lane to pass another vehicle 504 is not allowed on that part of the roadway where a solid lane dividing line 502 is located. In these situations, the system 200 is configured to detect when the vehicle is intending to cross over a solid lane dividing line 502, e.g., by monitoring the steering angle of the vehicle or the vehicle position, in which case the system 200 is configured to activate the alert system 210 generate an alert indicating that passing is not allowed on that section of the roadway. The system 200 may also be configured to activate the driving assistance system 106 take control of the steering and speed systems to prevent the vehicle from crossing over the solid lane dividing line in order to avoid violating the traffic rule.

Some traffic rules may only apply to certain types of vehicles. For example, some geographic regions may have traffic rules that apply only to commercial vehicles. As one example, some geographic regions may have lane restriction rules for commercial vehicles, such as semi-trucks. In some cases, commercial trucks are required to stay in the far-right lane and/or stay out of the far left lane except in cases of necessity. Another example is that some geographic regions require that semi-trucks have a lower speed limit on interstates than the speed limit for regular passenger vehicles. The system is configured to take the type of vehicle into consideration in determining the traffic rules that are to be monitored.

The system 200 is capable of detecting driving parameters to facilitate the detection of traffic situations pertaining to the traffic laws that are being monitored. Driving parameters include current speed of the vehicle, current acceleration or deceleration of the vehicle, current steering angle of the vehicle, position of the vehicle with respect to the roadway (e.g., current lane), direction of travel, and the like. These parameters may be received from other systems of the vehicle, such as the steering system, speed system, and brake system, while parameters such as vehicle position may be determined using the sensor system of the vehicle, e.g., the GPS sensor.

With knowledge of the driving parameters, the positions of other vehicles on the roadway, the recognition of road signs and lane dividing lines, the system 200 is configured to detect traffic situations that pertain to the traffic rules being monitored. As discussed above, to detect passing maneuvers when in a no passing zone or when a solid lane dividing line is detected, the controller is configured to detect when the vehicle begins to change lanes. This can be done by monitoring the position of the vehicle with respect to the roadway and/or the steering angle of the vehicle. Pulling alongside another vehicle in an adjacent lane may also be used as an indicator of a potential traffic violation, such as passing another vehicle on the right-hand side. To detect speeding violations, the system compares the current vehicle speed to the speed limit as taken from the database or as detected from identification of a speed limit sign. To detect stop sign violations, the system is configured to identify when the vehicle is approaching a stop sign, the speed at which the vehicle is approaching the stop sign and whether or not the vehicle is decelerating sufficiently. The system may also be configured to monitor whether the vehicle comes to a complete stop at the stop sign.

Some rules involve vehicle parameters which are typically not monitored in connection with traffic violations. The system may be configured to monitor these systems in connection with these rules. For example, some geographic regions may require that turn signals be used when changing lanes. The system is configured to detect when the vehicle is changing lanes. The system may also be configured to determine whether the appropriate turn signal is on while the lane change is being performed. The system may generate an alert to indicate that the turn signal should be used when changing lanes, or may be configured to automatically turn the appropriate turn signal on when a lane change is detected. Another traffic rule that may be monitored pertains to the gas tank. In Germany, it is illegal to run out of fuel while on the Autobahn. According to the invention, the system is configured to detect when the vehicle is approaching the Autobahn, e.g., using a GPS sensor, and to generate a warning regarding the fuel rule to the driver prior to the vehicle entering the Autobahn. While on the Autobahn, the system detects that the amount of fuel is low, e.g., below a predetermined amount, the system may generate an alert indicating that the amount of fuel is low and that the driver should exit the Autobahn.

The traffic violation warning and prevention system 200 may also be used to assist the driver in other driving situations and conditions. As one example, the system 200 may be useful at four way stop signs in which the system can alert the driver to stop and the stop sign and detect whether other vehicles have stopped at the stop and the order in which they have stopped. The system 200 can then provide an indication of when it is the driver's turn to proceed through the intersection. The system 200 can provide assistance in determining when to enter an intersection in other instances, such as at a roundabout. The system 200 may be configured to detect oncoming traffic and whether there is sufficient time and space to enter the roundabout as well as the correct lane to use to arrive at a desired exit from the roundabout. The system 200 may also be configured to detect school buses on the road, and in particular, when they have stopped to let children off the bus. In this case, the system may be configured to detect whether the bus is stopped and whether the stop sign which is typically on the side of the bus has been extended indicating that traffic should stop.

The traffic violation warning and prevention system 200 is beneficial for all drivers to ensure that the driver is informed of traffic rules that may not be known to the driver, such as rules in other countries or geographic regions, and to warn the driver of potential traffic rule violations. One application where this system would be particularly useful is driver training, such as in the case of new drivers and drivers getting certified to drive commercial vehicles (e.g., commercial driver's license).

While the disclosure has been illustrated and described in detail in the drawings and foregoing description, the same should be considered as illustrative and not restrictive in character. It is understood that only the preferred embodiments have been presented and that all changes, modifications and further applications that come within the scope of the claims are desired to be protected.

## Claims

1. A method of operating a vehicle (102) having a driver assistance system (106), the method comprising:
detecting driving parameters pertaining to the vehicle (102) while the vehicle (102) is being driven on a roadway using a sensor system (204) of the vehicle (102);
detecting objects in and around the roadway using the sensor system (204) of the vehicle (102), the objects including at least road signs, lane indicators, and other vehicles on the roadway;
identifying a traffic rule pertaining to the roadway and a geographic location in a geographic region that the vehicle (102) is currently traveling in using a traffic violation warning and prevention system (200) of the driver assistance system (106), the traffic rule being different in different geographic regions, a type of the vehicle being taken into consideration by the driver assistance system (106) in determining the traffic rule that is to be monitored; and
detecting a traffic situation pertaining to the traffic rule based on the detected objects and the driving parameters using the sensor system (204); and
generating an alert that warns a driver of a potential traffic violation when the traffic situation is detected using the traffic violation warning and prevention system,
wherein the traffic rule to be monitored pertains to a gas tank of the vehicle (102), the method further comprising:
detecting when the vehicle (102) is approaching a German Autobahn;
detecting that an amount of fuel in the gas tank is below a predetermined amount; and
generating a warning indicating that the amount of fuel is low to the driver prior to the vehicle (102) entering the German Autobahn.

2. The method of claim 1, wherein the driving parameters include at least one of a current position of the vehicle (102) with respect to lanes of the roadway, a current speed, a current steering angle, and a magnitude of acceleration or deceleration.

3. The method of claim 1, wherein the sensor system (204) includes at least one of an image sensor, a LIDAR sensors, a radar sensor, and a GPS sensor.

4. The method of claim 1, wherein the generating of the alert further comprises:
at least one of displaying the alert on a display screen (228) in the vehicle (102) and generating an audible alert or haptic alert.

5. A non-transitory computer readable storage medium comprising instructions which when executed by a processors, cause a driver assistance system (106) to perform the method according to any one of claims 1 to 4.

## Patentansprüche

1. Verfahren zum Betreiben eines Fahrzeugs (102) mit einem Fahrerassistenzsystem (106), wobei das Verfahren Folgendes umfasst:
Detektieren von Fahrparametern, die sich auf das Fahrzeug (102) beziehen, während das Fahrzeug (102) auf einer Straße gefahren wird, unter Verwendung eines Sensorsystems (204) des Fahrzeugs (102);
Detektieren von Objekten in und um die Straße unter Verwendung des Sensorsystems (204) des Fahrzeugs (102), wobei die Objekte mindestens Straßenschilder, Fahrspurindikatoren und andere Fahrzeuge auf der Straße beinhalten;
Identifizieren einer Verkehrsregel, die sich auf die Straße und einen geografischen Standort in einem geografischen Gebiet bezieht, in dem das Fahrzeug (102) gegenwärtig fährt, unter Verwendung eines Verkehrsverletzungswarnungs- und -verhinderungssystems (200) des Fahrerassistenzsystems (106), wobei die Verkehrsregel in verschiedenen geografischen Gebieten unterschiedlich ist, wobei ein Typ des Fahrzeugs durch das Fahrerassistenzsystem (106) beim Bestimmen der zu überwachenden Verkehrsregel berücksichtigt wird; und
Detektieren einer Verkehrssituation, die sich auf die Verkehrsregel bezieht, basierend auf den detektierten Objekten und den Fahrparametern unter Verwendung des Sensorsystems (204); und
Erzeugen einer Warnung, die einen Fahrer vor einer potenziellen Verkehrsverletzung warnt, wenn die Verkehrssituation unter Verwendung des Verkehrsverletzungswarnungs- und - verhinderungssystems detektiert wird,
wobei die zu überwachende Verkehrsregel einen Benzintank des Fahrzeugs (102) betrifft, wobei das Verfahren ferner Folgendes umfasst:
Detektieren, wann sich das Fahrzeug (102) einer deutschen Autobahn nähert;
Detektieren, dass eine Kraftstoffmenge in dem Benzintank unter einer vorbestimmten Menge liegt; und
Erzeugen einer Warnung, die angibt, dass die Kraftstoffmenge niedrig ist, an den Fahrer, bevor das Fahrzeug (102) auf die deutsche Autobahn einfährt.

2. Verfahren nach Anspruch 1, wobei die Fahrparameter eine aktuelle Position des Fahrzeugs (102) in Bezug auf Fahrspuren der Straße und/oder eine aktuelle Geschwindigkeit und/oder einen aktuellen Lenkwinkel und/oder eine Größe der Beschleunigung oder Verzögerung beinhalten.

3. Verfahren nach Anspruch 1, wobei das Sensorsystem (204) einen Bildsensor und/oder einen LIDAR-Sensor und/oder einen Radarsensor und/oder einen GPS-Sensor beinhaltet.

4. Verfahren nach Anspruch 1, wobei das Erzeugen der Warnung ferner Folgendes umfasst:
Anzeigen der Warnung auf einem Anzeigebildschirm (228) in dem Fahrzeug (102) und/oder Erzeugen einer akustischen Warnung oder haptischen Warnung.

5. Nichtflüchtiges computerlesbares Speichermedium, das Anweisungen umfasst, die, wenn sie von einem Prozessor ausgeführt werden, veranlassen, das ein Fahrerassistenzsystem (106) das Verfahren nach einem der Ansprüche 1 bis 4 durchführt.

## Revendications

1. Procédé de fonctionnement d'un véhicule (102) doté d'un système d'assistance à la conduite (106), le procédé comprenant :
la détection de paramètres de conduite se rapportant au véhicule (102) pendant la conduite du véhicule (102) sur une chaussée à l'aide d'un système de capteurs (204) du véhicule (102) ;
la détection d'objets dans et autour de la chaussée à l'aide du système de capteurs (204) du véhicule (102), les objets comportant au moins des panneaux de signalisation routière, des indicateurs de voie, et d'autres véhicules sur la chaussée ;
l'identification d'une règle de circulation se rapportant à la chaussée et d'un emplacement géographique dans une région géographique dans laquelle le véhicule (102) circule actuellement à l'aide d'un système d'avertissement et de prévention des infractions à la circulation (200) du système d'assistance à la conduite (106), la règle de circulation étant différente dans des régions géographiques différentes, un type du véhicule étant pris en compte par le système d'assistance à la conduite (106) pour la détermination de la règle de circulation à surveiller ; et
la détection d'une situation de circulation se rapportant à la règle de circulation sur la base des objets détectés et des paramètres de conduite à l'aide du système de capteurs (204) ; et
la génération d'une alerte avertissant un conducteur d'une infraction potentielle à la circulation lorsque la situation de circulation est détectée à l'aide du système d'avertissement et de prévention des infractions à la circulation,
la règle de circulation à surveiller se rapportant à un réservoir d'essence du véhicule (102), le procédé comprenant en outre :
la détection du moment où le véhicule (102) s'approche d'une autoroute allemande ;
la détection qu'une quantité de carburant dans le réservoir d'essence est inférieure à une quantité prédéterminée ; et
la génération d'un avertissement à l'intention du conducteur, indiquant que la quantité de carburant est faible avant que le véhicule (102) n'emprunte l'autoroute allemande.

2. Procédé selon la revendication 1, dans lequel les paramètres de conduite comportent au moins l'un des éléments suivants : une position actuelle du véhicule (102) par rapport à des voies de la chaussée, une vitesse actuelle, un angle de direction actuel, et une grandeur d'accélération ou de décélération.

3. Procédé selon la revendication 1, dans lequel le système de capteurs (204) comporte au moins l'un des éléments suivants : un capteur d'image, un capteur LIDAR, un capteur radar, et un capteur GPS.

4. Procédé selon la revendication 1, dans lequel la génération de l'alerte comprend en outre :
au moins l'un des éléments suivants : l'affichage de l'alerte sur un écran d'affichage (228) dans le véhicule (102), et la génération d'une alerte sonore ou haptique.

5. Support de stockage non transitoire lisible par ordinateur comprenant des instructions qui, lorsqu'elles sont exécutées par un processeur, amènent un système d'assistance à la conduite (106) à réaliser le procédé selon l'une quelconque des revendications 1 à 4.
